# EUROPEAN PATENT APPLICATION

(11) **EP 4 631 766 A1**
(43) Date of publication of application: **15.10.2025**
(21) Application number: 25169264.6
(22) Date of filing: 08.04.2025
(51) Int. Cl.: B60L 3/00, H02J 1/00, B60L 3/12, B60L 53/14, H02J 7/00, H02J 3/26, B60L 53/68, B60L 53/31, B60L 53/63, B60L 53/66, B60L 53/67

(54) **CONTROL ROUTINE FOR CHECKING PHASE CONNECTION ORDER USING AN ELECTRIC VEHICLE**

(30) Priority: 12.04.2024 US 202463633349 P; 31.12.2024 US 202419006559
(71) Applicant: Volvo Car Corporation, 405 31 Göteborg (SE)
(72) Inventor: Schöld, Jones, 405 31 Göteborg (SE); Ropel, Andreas Martin Viktor, 405 31 Göteborg (SE)
(74) Representative: Nederlandsch Octrooibureau

(57) **Abstract**

Systems/techniques that facilitate determination of phase order of a connection point via a control routine are provided. In various embodiments, a system can generate a control routine to determine a phase order of an electric vehicle supply equipment (EVSE) to which the EV is connected and a phase order of a connection point via asynchronous operation of phases. In various aspects, the system can draw, by the EV and via the control routine, a smaller current in one phase than other phases for a measurable time. In various cases, the system can adjust, locally in the EV or via a connected cloud, an external device, or the EVSE, a maximum current to draw or deliver by the EV per phase based on the phase order determined.

## Description

### CROSS REFERENCE TO RELATED APPLICATION

This application claims the benefit of U.S. Provisional Patent Application No. 63/633,349 filed April 12, 2024 and entitled "CONTROL ROUTINE FOR CHECKING PHASE CONNECTION ORDER USING AN ELECTRIC VEHICLE", which is incorporated by reference herein in its entirety.

### TECHNICAL FIELD

The subject disclosure relates generally to phase connection orders, and more specifically to control routines for checking phase connection order using an electric vehicle (EV).

### BACKGROUND

Phase order is specific sequence or arrangement of electrical phases in an electrical system. To control an amount of current that a vehicle can draw per phase, a Real Time Meter (RTM) is used to measure the current consumption on all three phases. However, the phases can be wrongly connected in an electric vehicle supply equipment (EVSE) that feeds current to the car. Unfortunately, existing techniques for determining the phase order involves manual inspection and correction of incorrect phase orders.

Accordingly, systems or techniques that can address one or more of these technical problems can be desirable.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate determination of phase order of a connection point via a control routine are described.

According to one or more embodiments, a system is provided. The system can be onboard a first vehicle, and the system can comprise a non-transitory computer-readable memory that can store computer-executable components. The system can further comprise a processor that can be operably coupled to the non-transitory computer-readable memory and that can execute the computer-executable components stored in the non-transitory computer-readable memory. In various embodiments, the computer-executable components can comprise a regulator component that generates a control routine to determine a phase order of an electric vehicle supply equipment (EVSE) to which the EV is connected and a phase order of a connection point via asynchronous operation of phases.

According to one or more embodiments, a computer-implemented method is provided. The computer-implemented method can comprise generating, by an onboard device comprising a processor, a control routine to determine a phase order of an electric vehicle supply equipment (EVSE) to which the EV is connected and a phase order of a connection point via asynchronous operation of phases.

According to one or more embodiments, a computer program product is provided. The computer program product can be stored on a non-transitory computer-readable medium and comprise machine-executable instructions, wherein, in response to being executed, the machine-executable instructions can cause computing equipment to perform operations, comprising: generating a control routine to determine a phase order of an electric vehicle supply equipment (EVSE) to which the EV is connected and a phase order of a connection point via asynchronous operation of phases.

According to one or more embodiments, the above-described systems can be implemented as computer-implemented methods or computer program products.

### DESCRIPTION OF THE DRAWINGS

FIG. 1 illustrates an example, non-limiting diagram showing incorrect connection of phases in an EVSE that feeds current to a vehicle in accordance with one or more embodiments described herein.
FIG. 2 illustrates a block diagram of an example, non-limiting system that facilitates determination of phase order of a connection point via a control routine in accordance with one or more embodiments described herein.
FIG. 3 illustrates a block diagram of an example, non-limiting system including a network component and a connected cloud that facilitates determination of phase order of a connection point via a control routine in accordance with one or more embodiments described herein.
FIG. 4 illustrates a diagram of an example, non-limiting system that facilitates determination of phase order of a connection point via a control routine in accordance with one or more embodiments described herein.
FIG. 5 illustrates a diagram of an example, non-limiting system with multiple charging units that facilitates determination of phase order of a connection point via a control routine in accordance with one or more embodiments described herein.
FIG. 6 illustrates a block diagram of an example, non-limiting system including a machine learning component, an artificial intelligence model, and a training component that facilitates determination of phase order of a connection point via a control routine in accordance with one or more embodiments described herein.
FIG. 7 illustrates a block diagram of an example, non-limiting system for training an artificial intelligence model that facilitates determination of phase order of a connection point via a control routine in accordance with one or more embodiments described herein.
FIG. 8 illustrates a flow diagram of an example, non-limiting computer-implemented method that can facilitate determination of phase order of a connection point via a control routine in accordance with one or more embodiments described herein.
FIG. 9 illustrates a flow diagram of an example, non-limiting computer-implemented method that can facilitate determination of phase order of a connection point via a control routine in accordance with one or more embodiments described herein.
FIG. 10 illustrates a flow diagram of an example, non-limiting computer-implemented method that can facilitate determination of phase order of a connection point via a control routine in accordance with one or more embodiments described herein.
FIG. 11 illustrates a block diagram of an example, non-limiting operating environment in which one or more embodiments described herein can be facilitated.
FIG. 12 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Phase order is specific sequence or arrangement of electrical phases in an electrical system. To control an amount of current that a vehicle can draw per phase, a Real Time Meter (RTM) is used to measure the current consumption on all three phases. However, the phases can be wrongly connected in an electric vehicle supply equipment (EVSE) that feeds current to the vehicle. Such incorrect connection of phase can cause inefficient operation of charging the vehicle. For example, incorrect connection of phases can cause uneven current distribution where the current may not be distributed evenly across the three phases within a charging unit, causing overload on one phase. This can result in overheating of wires due to excessive current flow, potentially damaging the wires and internal components of the charging unit. Further, EVs are typically designed to operate with a specific phase rotation, so incorrect phase order can disrupt the internal operations of the charging unit. This can cause slower charging speeds for the EV compared to its potential or malfunctions in the charging unit that can prevent charging altogether or lead to error messages.

Unfortunately, and as recognized by the inventors of various embodiments described herein, existing techniques for determining and remediating incorrect phase order connections usually rely upon manual inspection of phase order connections. More specifically, phase order connection can be determined by manually tracing wire connections and verifying the connections.

Accordingly, systems or techniques that can address one or more of these technical problems can be desirable.

Various embodiments described herein can address one or more of these technical problems. One or more embodiments described herein can include systems, computer-implemented methods, apparatus, or computer program products that can facilitate determination of phase order of a connection point via a control routine. That is, the present inventors realized that various disadvantages associated with existing techniques for determining and remediation incorrect phase order connections.

Various embodiments described herein can be considered as a computerized tool (e.g., any suitable combination of computer-executable hardware or computer-executable software) that can facilitate determination of phase order of a connection point via a control routine. In various aspects, there can be a vehicle. In various instances, the vehicle can be outfitted with the computerized tool. In various cases, the first computerized tool can comprise a regulator component, a measuring component, or a network component.

Various embodiments described herein can be employed to use hardware or software to solve problems that are highly technical in nature (e.g., to facilitate determination of phase order of a connection point via a control routine), that are not abstract and that cannot be performed as a set of mental acts by a human. Further, some of the processes performed can be performed by a specialized computer (e.g., a deep learning neural network having internal parameters such as convolutional kernels) for carrying out defined tasks related to determination of phase order connections.

Moreover, various embodiments described herein can integrate into a practical application various teachings relating to determination of phase order of a connection point. As explained above, some existing techniques rely upon manual inspection and remediation of phase order connections. This can be considered as various disadvantages of existing techniques.

Various embodiments described herein can address various of these disadvantages. Specifically, various embodiments described herein can include generating and executing a control routine to cause the vehicle to draw a smaller current in one phase than other phases for a measurable time. In various aspects, the control routine can iterate through all phases to draw a smaller current for each phase individually. Such embodiments can more reliably and efficiently determine phase order connections, as compared to various existing techniques. In some cases, the computerized tool of the vehicle computing device can even transmit RTM data to a connected cloud, so as to adjust vehicle current consumption to cause more efficient charging of the vehicle. Accordingly, various embodiments can help to ameliorate various disadvantages of existing techniques. Thus, various embodiments described herein certainly constitute a concrete and tangible technical improvement. Therefore, various embodiments described herein clearly qualify as useful and practical applications of computers.

It should be appreciated that the herein figures and description provide non-limiting examples of various embodiments and are not necessarily drawn to scale.

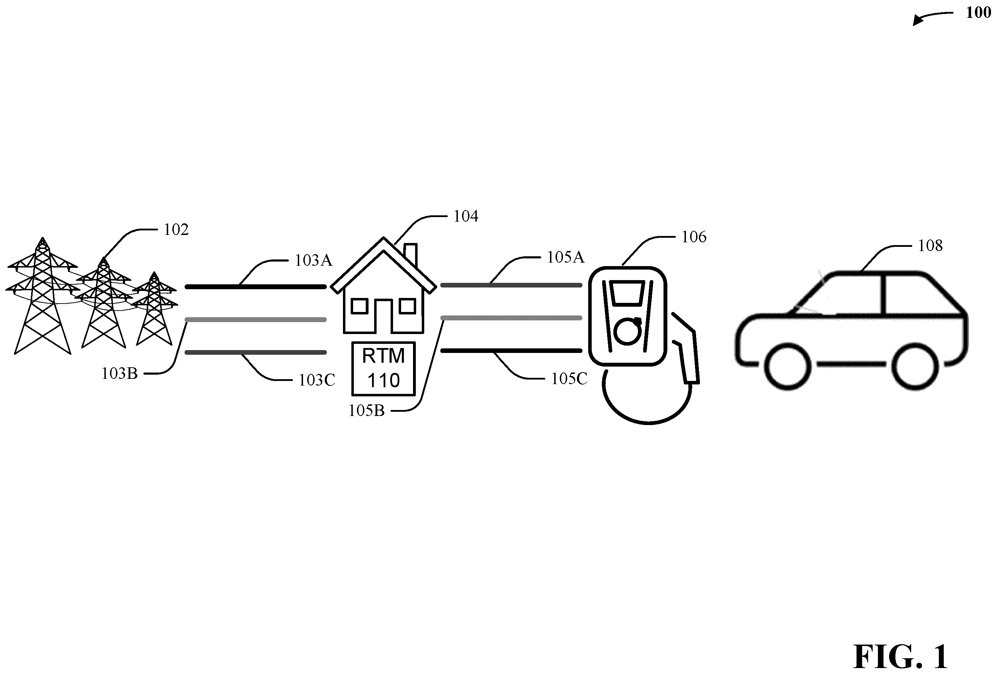

FIG. 1 illustrates an example, non-limiting diagram 100 showing incorrect connection of phases in an EVSE that feeds current to a vehicle in accordance with one or more embodiments described herein.

In various embodiments, there can be a vehicle 108. In various aspects, the vehicle 108 can be any suitable vehicle or automobile (e.g., can be a car, a truck, a van, a motorcycle). In various instances, the vehicle 108 can have or otherwise exhibit any suitable type of electric propulsion system (e.g., can be an electric vehicle, can be a hybrid vehicle). In various aspects, the vehicle 108 can be parked (e.g., can be parked in a parking lot, by a curb, or in a driveway).

In various aspects, there can be an electric grid 102. In various instances, the electric grid 102 can be any suitable network of transmission lines or distribution infrastructure to transport electricity to a connection point (e.g., home, dwelling, business, charging park, charging station, duplex, tri-plex, quad-plex, multi-family unit, apartment). In various instances, the electric grid 102 can be any suitable distance away from the vehicle 108 (e.g., can be within mere feet of the vehicle 108, or can be many miles away from the vehicle 108) or from the connection points.

In various aspects, there can be a connection point 104. In various instances, the electric grid 102 can provide electricity to the connection point 104. In various cases, the connection point 104 can comprise a Real-Time Meter (RTM) 110 that measures current consumption on the incoming phases 103 of the connection point 104 (e.g., 103A, 103B, 103C). The measured current consumption can be considered as RTM data.

In various instances, there can be a charging unit 106 that is hardwired or installed to the connection point 104. In various cases, the charging unit can be any suitable equipment that can be used to charge the vehicle 108 (e.g., charging station, EVSE, wallbox, charging dock). Communication between the charging unit 106 and the vehicle 108 can utilize ISO15118-20 (international standard that defines how EVs can communicate with an electric grid for bidirectional charging and discharging) or any other suitable communication protocol that can send information of a maximum current for each phase. In various aspects, the charging unit 106 can be connected to the vehicle 108 via any suitable charging cable. In various instances, the connection point 104 or the charging unit 106 can be a three-phase system.

In any case, the vehicle 108 can comprise, have, or otherwise be outfitted or equipped with a phase connection order determination system 206. In other words, the phase connection order determination system 206 can be onboard the vehicle 108.

As shown, the connection of the phases to the charging unit 106 can be incorrect. That is, the phase order of incoming phases 103 can be different from the phase order of phases 105 (e.g., mismatched connection, incorrect wiring). Thus, in using the RTM data to measure current consumption on the incoming phases 103, the RTM readings wouldn't reflect the true current draw on each phase because the phase order connection of phases 105 do not correspond to the actual electrical connection. This can cause challenges in using the RTM data for controlling the amount of current the vehicle 108 can draw per phase because control systems of current consumption rely on the RTM data to regulate the total current the vehicle 108 can draw. With incorrect phase connection, the RTM readings won't represent the actual current on each phase, which can lead to uneven current distribution or inaccurate total current readings. Various embodiments described herein can address this problem of incorrect phase orders by implementing a control routine to check phase orders of incoming phases 103 or phases 105.

In various embodiments, as described herein, the phase connection order determination system 206 can check, using a control routine, phase order of incoming phases 103 of the connection point 104 or a phase order of phases 105 of the charging unit 106.

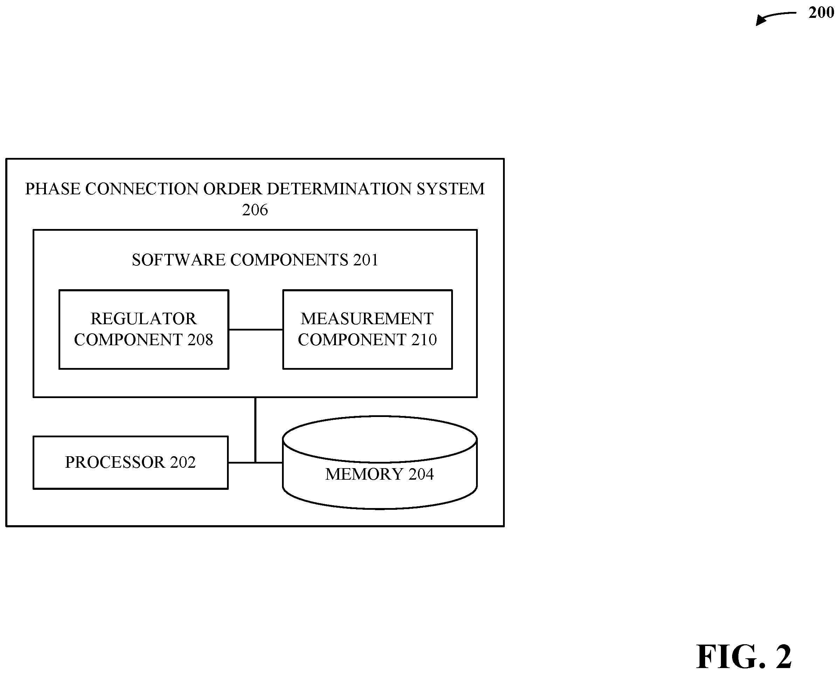

FIG. 2 illustrates a block diagram of an example, non-limiting system 200 that can facilitate determination of phase order of a connection point via a control routine in accordance with one or more embodiments described herein. In other words, FIG. 2 depicts a non-limiting example embodiment of the phase connection order determination system 206.

In various embodiments, the phase connection order determination system 206 can comprise a processor 202 (e.g., computer processing unit, microprocessor) and a non-transitory computer-readable memory 204 that is operably or operatively or communicatively connected or coupled to the processor 202. The non-transitory computer-readable memory 204 can store computer-executable instructions which, upon execution by the processor 202, can cause the processor 202 or other components of the phase connection order determination system 206 (e.g., software components 201, regulator component 208, measurement component 210) to perform one or more acts. In various embodiments, the non-transitory computer-readable memory 204 can store computer-executable components (e.g., software components 201, regulator component 208, measurement component 210), and the processor 202 can execute the computer-executable components.

In various embodiments, the phase connection order determination system 206 can comprise sub-components (e.g., regulator component 208, measurement component 210).

In various aspects, as described herein, the regulator component 208 can generate a control routine to determine the phase order of incoming phases 103 of the connection point 104 and the phase order of phases 105 of the charging unit 106 to which the vehicle 108 is connected to. In various aspects, the regulator component 208 can determine the phase order of incoming phases 103 and the phase order of phases 105 via asynchronous operation of phases.

In various embodiments, as described herein, the regulator component 208 can engage the measurement component 210 to determine the phase order of incoming phases 103 of the connection point 104 by mapping a phase (e.g., 105A, 105B, 105C) with the smaller current to an incoming phase (e.g., 103A, 103B, 103C) of the connection point 104.

In various aspects, the control routine can utilize asynchronous operation of phases 105 to draw a smaller current in a particular phase than other phases for a measurable time. Thus, to determine phase order of incoming phases 103 and phase order of phases 105, the measurement component 210 can determine which phase of phases 105 comprises a smaller current and map that phase to the correct incoming phase of the connection point 104.

In various embodiments, the current consumption of each phase can be measured by RTM 110. The measurements of the current consumption can be considered as the RTM data (e.g., RTM readings). In various aspects, the measurement component 210 can electronically access the RTM data to facilitate mapping of phases 105 to the correct incoming phases 103.

As a non-limiting example, the vehicle 108 can be connected to a three-phase system of the charging unit 106, wherein the charging unit 106 has a maximum current of 6A. Furthermore, the fuse limit of the connection point 104 can be 16A.

In various aspects, before charging of the vehicle 108 starts, current consumption of phase 105A, phase 105B, and phase 105C can be 2A, 6A, and 10A respectively. In various cases, after vehicle 108 begins charging, the vehicle 108 can draw the maximum current of the charging unit 106. For instance, the current consumption of phase 105A, phase 105B, and phase 105C before charging begins can be 6A, 6A, and 6A respectively. In various aspects, the regulator component 208 can cause the control routine to draw less current on phase 105A than the present current consumption after a measurable time. In various instances, the measurable time can be any suitable duration of time (e.g., 2 seconds, 30 seconds, 1 minute).

For instance, the current consumption of phase 105A, phase 105B, and phase 105C after reducing the current drawn on phase 105A via regulator component 208 can be 4A, 6A, and 6A respectively. In various aspects, the regulator component 208 can then cause the control routine to draw less current than the present current consumption on phase 105B after a measurable time. In various aspects, the regulator component 208 can also cause the control routine to draw the maximum current on phase 105A again. The order in which the regulator component 208 causes the control routine to change the current consumption on the phases 105 can be any suitable order. For instance, the regulator component 208 can cause the control routine to increase the current consumption of phase 105A to the maximum current before decreasing current consumption of phase 105B. In other instances, the regulator component 208 can cause the control routine to increase the current consumption of phase 105A to the maximum current after decreasing current consumption of phase 105B. In still other instances, the regulator component 208 can cause the control routine to increase the current consumption of phase 105A to the maximum current in parallel with decreasing current consumption of phase 105B.

For example, the current consumption of phase 105A, phase 105B, and phase 105C after reducing the current drawn on phase 105B and increasing the current drawn on phase 105A via regulator component 208 can be 6A, 4A, and 6A respectively. In various aspects, the regulator component 208 can then cause the control routine to draw less current on phase 105C after a measurable time. In various aspects, the regulator component 208 can also cause the control routine to draw the maximum current on phase 105B again and have current consumption of phase 105A remain unchanged. For instance, the current consumption of phase 105A, phase 105B, and phase 105C after reducing the current drawn on phase 105C and increasing the current drawn on phase 105B via regulator component 208 can be 6A, 6A, and 4A respectively.

In various aspects, the regulator component 208 can then cause the control routine to draw the maximum current on all phases 105 after a measurable time. For instance, the current consumption of phase 105A, phase 105B, and phase 105C after increasing the current drawn to the maximum current on all phases 105 via regulator component 208 can be 6A, 6A, and 6A respectively.

After termination or completion of the control routine, the regulator component 208 can engage the measurement component 210 to determine the phase order of incoming phases 103 and the phase order of phases 105. For instance, in the previously described non-limiting example, the regulator component 208 can determine that phase 103A correctly matches phase 105C, phase 103B correctly matches phase 105B, and phase 103C correctly matches phase 105A. Accordingly, the regulator component 208 can control or adjust the maximum current that the vehicle 108 can draw from or deliver. For instance, the regulator component 208 can control current consumption that the vehicle 108 can draw, after determination that the phase order of incoming phases 103 is different from the phase order of phases 105, as 14A on phase 105A, 10A on phase 105B, and 6A on phase 105C.

In various aspects, the current consumption during execution of the control routine can be determined by the RTM data measured by the RTM 110 of the connection point 104 and accessed by measurement component 210.

In various instances, the order of phases from which the control routine draws the smaller current can be any suitable order. For instance, the control routine can cause the vehicle 108 to draw a smaller current in phase 105B first, phase 105A second, and phase 105C third. In various aspects, the control routine can utilize any suitable measure of time to wait between switching of phases to draw the smaller current. Furthermore, the control routine can utilize different measurable times between each change of current consumption. For instance, the control routine can cause less current to be drawn on phase 105A for 3 seconds, less current to be drawn on phase 105B for 2 seconds, and less current to be drawn on phase 105C for 4 seconds.

Note that, although the non-limiting example described herein discuss the control routine increasing the current consumption to the maximum current, any suitable increase (e.g., any suitable measurable deviation) in current consumption can facilitate determination of the phase orders of incoming phases 103 and phases 105. For example, before charging, the current consumption of all three phases can be any suitable amount that can be decreased (e.g., 8A if the maximum current is 16A). Furthermore, the current consumption of the phases 105 before charging can differ between phases (e.g., the current consumption of phase 105A, phase 105B, and phase 105C can be 10A, 6A, and 7A respectively).

In various embodiments, the amount by which the current consumption is decreased for each of phases 105 can differ between phases. For instance, current consumption of phase 105A can be decreased by 3A, current consumption of phase 105B can be decreased by 2A, and current consumption of phase 105C can be decreased by 5A. In any case, so long as there is a measurable deviation or change in current consumption for each phase, the regulator component 208 can be enabled to determine the phase orders of incoming phases 103 and phases 105. Similarly, the amount by which the current consumption is increased for each of phases 105 can differ between phases or be any suitable amount. For instance, current consumption of phase 105A can be 6A, which can be decreased to 4A, and then increased to 5A. In other instances, current consumption of phase 105A can be increased to 10A after decreasing to 4A, current consumption of phase 105B can be increased to 8A after decreasing to 4A, and current consumption of phase 105C can be increased to 6A after decreasing to 4A. In any case, the current consumption can be increased to any suitable amount that is greater than the decreased current consumption of the phase of interest (e.g., the phase with decreased current consumption).

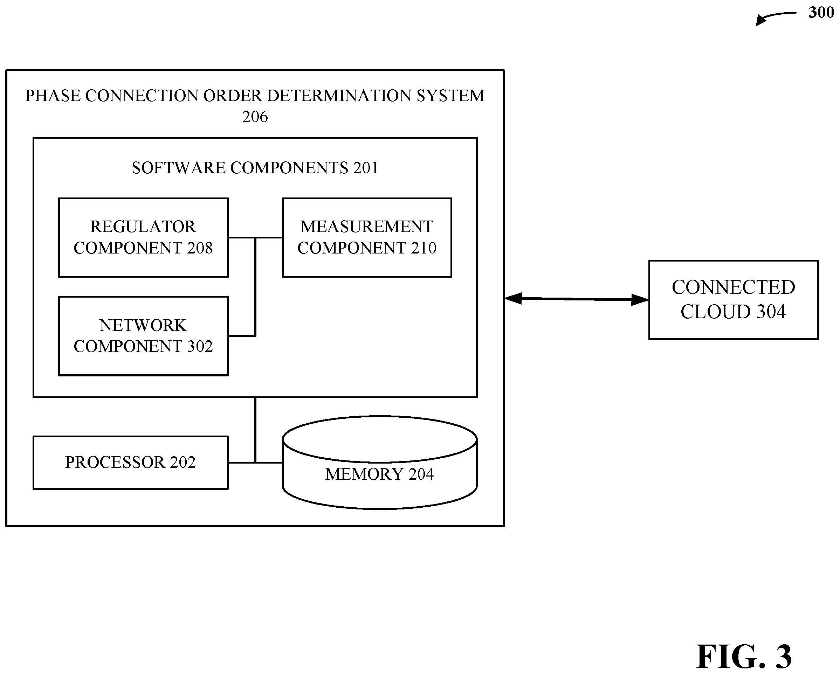

FIG. 3 illustrates a block diagram of an example, non-limiting system 300 including a network component and a connected cloud that can facilitate determination of phase order of a connection point via a control routine in accordance with one or more embodiments described herein. As shown, the non-limiting system 300 can, in some cases, comprise the same components as non-limiting system 200, and can further comprise a network component 302 and a connected cloud 304.

In various embodiments, the connected cloud 304 can be any suitable cloud platform or cloud-based system (e.g., a manufacturer cloud platform, an EV charging management system).

In various embodiments, the software components 201 can further comprise network component 302. In various cases, as described herein, the regulator component 208 can engage the network component 302 to adjust the maximum current to draw or deliver by the vehicle 108 per phase based on the phase order of incoming phases 103 that is determined. In various embodiments, the network component 302 can execute such adjustment locally in vehicle 108, via connected cloud 304, via an external device, or via charging unit 106.

For instance, in various embodiments, the RTM 110 can be electronically or wirelessly connected to the charging unit 106 (e.g., Wi-Fi, hardwired). Further, in various aspects, the connected cloud 304 or the external device can be electronically connected to vehicle 108 and/or the charging unit 106. Thus, the RTM data can be transmitted to the connected cloud 304 or the external device. Moreover, in various embodiments, the measurement component 210 can electronically access, via any suitable connection, the connected cloud 304 or the external device to access the RTM data measured by RTM 110. In other instances, the network component 302 can execute such adjustment to the maximum current to draw or deliver locally in vehicle 108 without the connected cloud 304 or the external device. In still other instances, such adjustment can be performed locally in the charging unit 106. In any case, the RTM data can be electronically accessed to identify phase order of incoming phases 103 or phases 105 using the control routine. For example, by executing the control routine, incorrect ordering of phases can be determined from higher current readings (e.g., from RTM 110) on a phase that is actually supplying less power to the vehicle 108, or determined from incorrect total current where the combined reading (e.g., from RTM 110) from all three phases don't represent the actual total current being drawn by the EV.

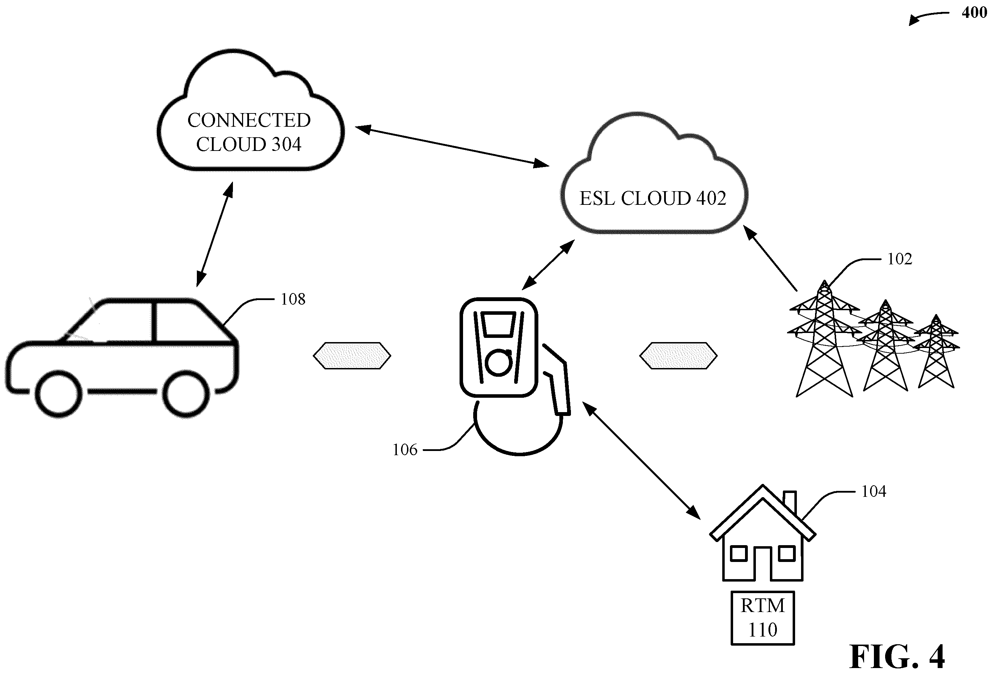

FIG. 4 illustrates a diagram of an example, non-limiting system 400 that can facilitate determination of phase order of a connection point via a control routine in accordance with one or more embodiments described herein.

In various embodiments, the connected cloud 304 can be electronically connected to an electric service layer (ESL) cloud 402 for remote monitoring of RTM data, data collection, and communication with utilities. In some instances, the connected cloud 304 can be electronically connected to the charging unit 106 via the ESL cloud 402. That is, the ESL cloud 402 can be electronically connected to the charging unit 106. Therefore, the connected cloud 304 can access the RTM data during the control routine to identify phase order of incoming phases 103 or phases 105, and thus enable regulator component 208 to adjust current consumption for each phase to optimize charging of vehicle 108.

In various aspects, the ESL cloud 402 can also be electronically connected to the electric grid 102. The ESL cloud 402 can receive data from the electric grid 102 to optimize charging of vehicle 108. For instance, the ESL cloud 402 can collect smart meter data (e.g., total power consumption, peak demand, voltage fluctuations) to receive data on electricity usage and optimize charging operations. In various embodiments, the ESL cloud 402 can establish communication channels with grid operators to receive real-time grid status updates (e.g., alerts on grid stress, potential outages, renewable energy availability from the grid operator). The connected cloud 304 or the vehicle 108 can thus access such data via ESL cloud 402 to adjust and optimize charging operations of vehicle 108.

In various instances, the charging unit 106 can comprise a processor that can condition a signal. In various aspects, the signal can be utilized to determine an incorrect phase order connection of the connection point 104. In various embodiments, the signal can be any electrical signal, digital signal, communication signal, control signal, or any other suitable signal that can communicate to vehicle 108 that the phase order connection of the connection point 104 is incorrect (e.g., does not match the phase order of phases 105).

In various embodiments, prior to connecting vehicle 108 to the charging unit 106, an intermediate component can be installed on a battery of vehicle 108. In particular, the intermediate component can be installed between a charging port of charging unit 106 and a battery array of vehicle 108. In various aspects, the intermediate component can function as a switch based on a determination of incorrect or correct phase order connection. That is, if a determination that the phase order connection is incorrect, the intermediate component can prevent charging of the vehicle 108. In other cases, if a determination that the phase order connection is correct, the intermediate component can facilitate charging of vehicle 108.

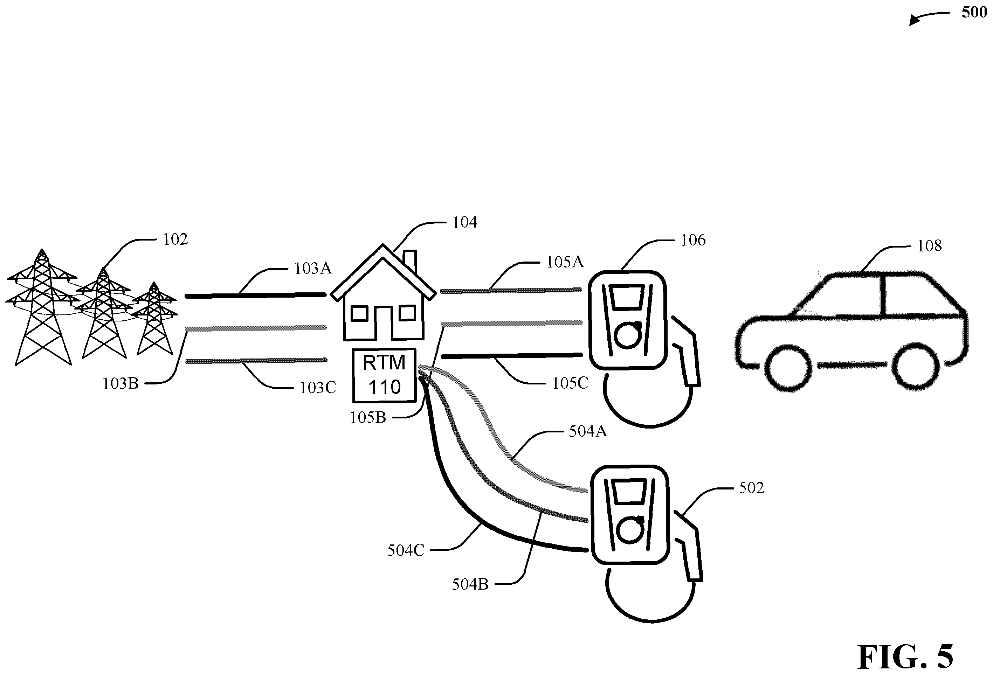

FIG. 5 illustrates a diagram of an example, non-limiting system 500 with multiple charging units that facilitates determination of phase order of a connection point via a control routine in accordance with one or more embodiments described herein.

In various embodiments, there can be one or more of charging unit 106 hardwired or installed to the connection point 104. For example, a charging unit 502 and the charging unit 106 can be hardwired or installed to the connection point 104. In some cases, phase rotation is implemented when more than one charging unit is installed to a connection point, wherein one or more of the phases will be in a different order between the multiple charging units (e.g., the first phase is different between charging units). In such cases, the vehicle 108 (when connected to charging unit 502 or a second vehicle connected to charging unit 502) can execute the control routine via regulator component 208 to determine phase order of phases 504 (e.g., 504A, 504B, 504C). In some instances, data (e.g., RTM data, determination of phase orders) can be shared between the one or more of charging unit 106 (e.g., between charging unit 502 and charging unit 106).

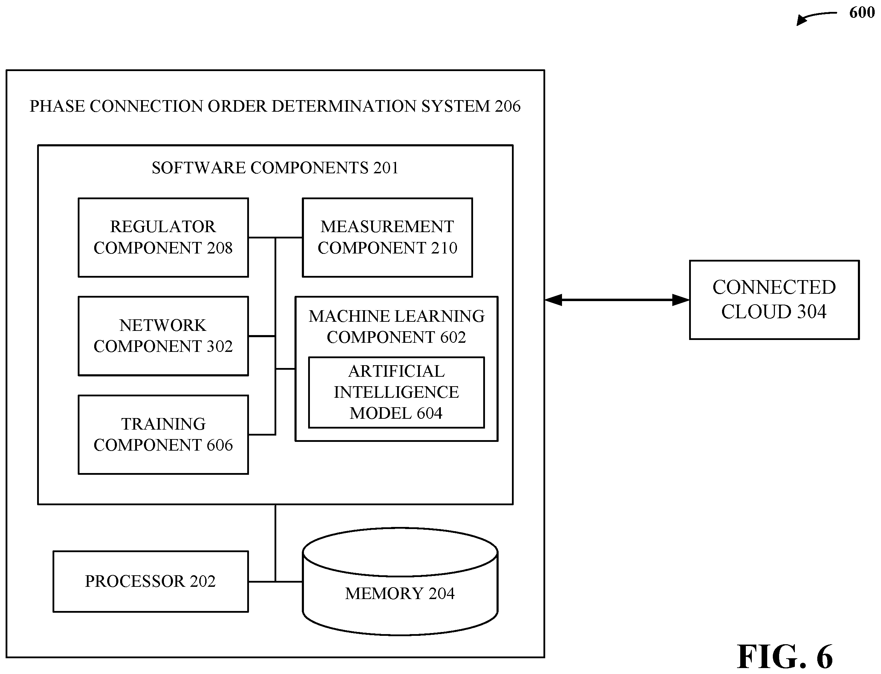

FIG. 6 illustrates a block diagram of an example, non-limiting system 600 including a machine learning component, an artificial intelligence model, and a training component that facilitates determination of phase order of a connection point via a control routine in accordance with one or more embodiments described herein. As shown, the non-limiting system 600 can, in some cases, comprise the same components as non-limiting system 300, and can further comprise a machine learning component 602, an artificial intelligence model 604, and a training component 606.

In various embodiments, the machine learning component 602 can electronically store, maintain, control, or otherwise access the artificial intelligence model 604. In various embodiments, the artificial intelligence model 604 can comprise a deep learning neural network. In various instances, the training component 606 can electronically train the deep learning neural network on phase determination data. More specifically, the training component 606 can electronically store, maintain, control, or otherwise access the deep learning neural network. In various aspects, the deep learning neural network can exhibit any suitable internal architecture. For example, the deep learning neural network can include any suitable numbers of any suitable types of layers (e.g., input layer, one or more hidden layers, output layer, any of which can be convolutional layers, dense layers, non-linearity layers, pooling layers, batch normalization layers, or padding layers). As another example, the deep learning neural network can include any suitable numbers of neurons in various layers (e.g., different layers can have the same or different numbers of neurons as each other). As yet another example, the deep learning neural network can include any suitable activation functions (e.g., softmax, sigmoid, hyperbolic tangent, rectified linear unit) in various neurons (e.g., different neurons can have the same or different activation functions as each other). As still another example, the deep learning neural network can include any suitable interneuron connections or interlayer connections (e.g., forward connections, skip connections, recurrent connections).

In various cases, if the deep learning neural network has not yet undergone any training, the training component 606 can randomly initialize the trainable internal parameters (e.g., convolutional kernels, weight matrices, bias vectors) of the deep learning neural network. In contrast, if the deep learning neural network has already undergone at least some training, the training component 606 can refrain from re-initializing the trainable internal parameters of the deep learning neural network.

In various aspects, the training component 606 can execute the deep learning neural network on the phase determination data, thereby causing the deep learning neural network to produce some output. In particular, the training component 606 can feed the phase determination data to an input layer of the deep learning neural network, the phase determination data can complete a forward pass through one or more hidden layers of the deep learning neural network, and such forward pass can cause an output layer of the deep learning neural network to compute the output based on activations provided by the one or more hidden layers.

Note that the format, size, or dimensionality of the output can be controlled or otherwise dictated by the number, arrangement, or sizes of the neurons or of other internal parameters (e.g., convolutional kernels) that are contained in or that otherwise make up the output layer of the deep learning neural network. So, the output can be forced to have any suitable or any desired format, size, or dimensionality, by adding, removing, or otherwise adjusting neurons or other internal parameters to, from, or within the output layer of the deep learning neural network. So, the output can be considered as a predicted or inferred determination of incorrect or correct phase order connection that the deep learning neural network believes should correspond to the phase determination data (e.g., believes will result from the phase determination data). In various cases, if the deep learning neural network has so far undergone no or little training, the output can be highly inaccurate (e.g., can be very different from a ground-truth annotation).

In any case, the training component 606 can compute an error or loss (e.g., mean absolute error (MAE), mean squared error (MSE), cross-entropy error) between the output and the determination of incorrect or correct phase order connection. In various aspects, the training component 606 can update the trainable internal parameters of the deep learning neural network by performing backpropagation (e.g., stochastic gradient descent) driven by the computed error or loss.

In various aspects, such training procedure can be repeated for any suitable number of phase-determination-data-determination pairs. Such training can ultimately cause the trainable internal parameters of the deep learning neural network to become iteratively optimized for accurately inferring determinations of incorrect or correct phase order connection based on inputted phase determination data. Note that the training component 606 can implement any suitable training batch sizes, any suitable training termination criteria, or any suitable error, loss, or objective functions.

In any case, the phase determination data, as described hereon, can be considered as any data relevant or related to the phase order of vehicle 108 (e.g., phase order of phases 105), the phase order of the connection point 104 (e.g., phase order of incoming phases 103), RTM data from RTM 110, or any suitable data received from the connected cloud 304 (e.g., maximum currents to draw or deliver). In various instances, the phase determination data that is collected can exhibit any suitable size or length.

In various embodiments, the phase determination data can facilitate cloud-based training of artificial intelligence model 604. More specifically, the connected cloud 304 can receive data from other vehicles that can be comprised by the phase determination data. That is, the connected cloud 304 can electronically access, interact with, or collect data from the other vehicles via any suitable connection (e.g., cellular, Wi-Fi, vehicle-2-vehicle). In any case, the artificial intelligence model 604 can be trained on such cloud-based data to determine an incorrect or correct phase order with an associated level of confidence. For example, if the artificial intelligence model 604 has been trained on cloud-based data received from a plurality of other vehicles, the artificial intelligence model 604 can make a determination with a higher level of confidence.

In various aspects, the phase determination data can further comprise data received from various connection points. For example, the phase determination data can comprise data received from different EV charging stations that are connected via any suitable connection (e.g., Wi-Fi, connected cloud 304). Thus, the artificial intelligence model 604 can be trained on the data received from the various connection points to make a determination with a higher level of confidence. For example, the control routine can be executed on a charging station with a different vehicle. Accordingly, the phase determination data can comprise data received and resulting from executing the control routine on the first charging station (e.g., data indication a determination of phase order of incoming phases of the charging station). In some cases, the connected cloud 304 can store such data, such that when vehicle 108 connects to the charging station at a later point in time, the artificial intelligence model 604 can automatically determine that phase connection order is incorrect or correct. Accordingly, measures can be taken to automatically prevent initiation of charging of vehicle 108 to mitigate damages to vehicle 108 (e.g., by the intermediate component installed on the battery of vehicle 108), or automatically allow charging of vehicle 108. In other cases, if there is a determination that phase order connection is incorrect, the artificial intelligence model 604 can automatically determine the maximum current to draw or deliver by vehicle 108 based on the phase determination data accessed from the charging station. In other words, charging can be prevented or facilitated until the artificial intelligence model 604 determines that phase order connection is incorrect, or determines a maximum current to draw or deliver by vehicle 108.

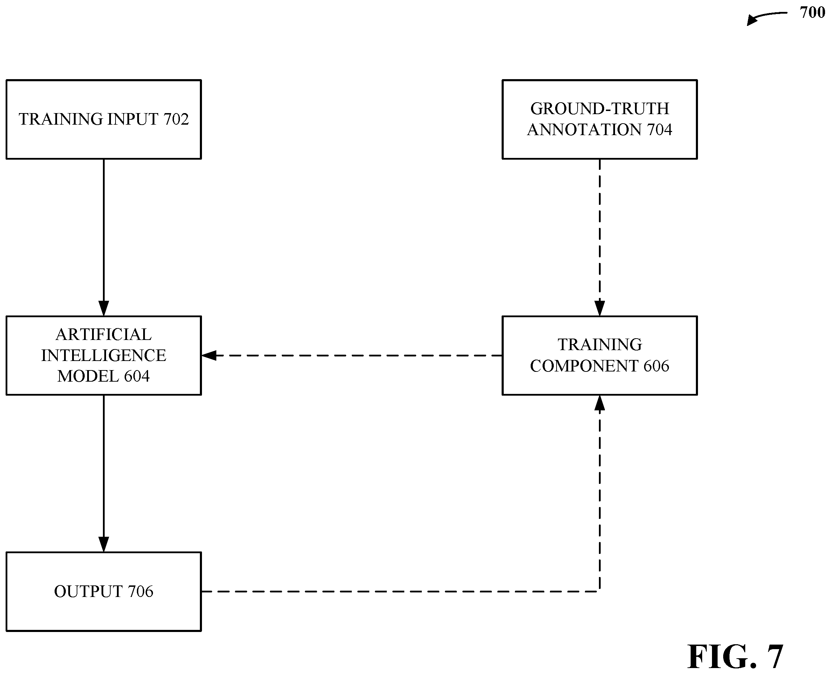

FIG. 7 illustrates a block diagram of an example, non-limiting process 700 of training an artificial intelligence model for facilitating determination of phase order of a connection point via a control routine in accordance with one or more embodiments described herein.

Prior to beginning such training, the training component 606 can initialize in any suitable fashion (e.g., random initialization) the trainable internal parameters (e.g., weight matrices, bias vectors, convolutional kernels) of the artificial intelligence model 604 (e.g., the deep learning neural network).

In various aspects, the training component 606 can electronically execute the artificial intelligence model 604 on the training input 702, and such execution can cause the artificial intelligence model 604 to produce an output 706. More specifically, as mentioned above, the training input 702 can be one or more scalars, one or more vectors, one or more matrices, one or more tensors, or one or more character strings. Accordingly, the training component 606 can feed the training input 702 (e.g., can feed whatever scalars, vectors, matrices, tensors, or character strings that define the training input 702) to an input layer of the artificial intelligence model 604. In various instances, the training input 702 (e.g., whatever scalars, vectors, matrices, tensors, or character strings that define the training input 702) can complete a forward pass through one or more hidden layers of the artificial intelligence model 604. In various cases, an output layer of the artificial intelligence model 604 can compute the output 706, based on activation maps yielded by the one or more hidden layers.

Note that the format, size, or dimensionality of the output 706 can be dictated by the number, arrangement, sizes, or other characteristics of the neurons, convolutional kernels, or other internal parameters of the output layer (or of any other layers) of the artificial intelligence model 604. Accordingly, the output 706 can be forced to have a format, size, or dimensionality that is the same as, comparable to, or otherwise commensurate with that of the ground-truth annotation 704. Thus, the output 706 can be considered as a predicted or inferred determination of incorrect or correct phase order connection. In other words, the output 706 can be considered as a predicted or inferred determination of incorrect or correct phase order connection that the artificial intelligence model 604 believes would result from the training input 702. In contrast, the ground-truth annotation 704 can be considered as the ground-truth determination that is known or deemed to correspond to the training input 702. That is, the ground-truth annotation 704 can be the correct or accurate determination of incorrect or correct phase order connection that is known or deemed to result from the training input 702. Note that, if the artificial intelligence model 604 has so far undergone no or little training, then the output 706 can be highly inaccurate (e.g., can be very different from the ground-truth annotation 704).

In various aspects, the training component 606 can compute any suitable error or loss (e.g., MAE, MSE, cross-entropy) between the output 706 and the ground-truth annotation 704. In various instances, the training component 606 can update the trainable internal parameters of the artificial intelligence model 604, by performing backpropagation (e.g., stochastic gradient descent) driven by the computed error or loss.

In various aspects, the above-described training procedure can be repeated for any suitable number of phase-determination-data-determination pairs. Such training can ultimately cause the trainable internal parameters of the artificial intelligence model 604 to become iteratively optimized for accurately or correctly inferring determination of incorrect or correct phase order connection in response to inputted phase determination data. In various cases, the training component 606 can implement any suitable training termination criterion, any suitable training batch sizes, or any suitable error, loss, or objective functions when training the artificial intelligence model 604.

In any case, the artificial intelligence model 604 can thus be trained or configured to receive as input any phase determination data, and to determine as output if the phase order is incorrect. In various embodiments, the artificial intelligence model 604 can further be trained on the phase determination data to determine the maximum current to draw of deliver by the vehicle 108. For example, the artificial intelligence model 604 can be trained on training input 702 that comprises phase order determinations of incoming phases 103 and phases 105 to predict or infer the maximum current to draw or deliver of vehicle 108, where the training input 702 has corresponding ground-truth annotation 704 that comprises the known accurate or correct maximum current to draw or deliver.

In various embodiments, based on a determination of incorrect or correct phase order connection by artificial intelligence model 604, an electronic alert can be transmitted to a driver or operator of vehicle 108. For instance, if a determination that the phase order connection is incorrect, an electronic alert can be displayed or otherwise conveyed (e.g., audibly) to the driver or operator via any suitable electronic display connected to the vehicle 108. As an example, the electronic alert can comprise a message or notification that informs the driver that damage can be caused to the vehicle 108 if charging starts or continues. In various aspects, the electronic alert can further inform that driver of operator that the connection with the connection point 104 is incorrect or faulty, and to proceed to a different connection point.

In various embodiments, the electronic alert can be provided to an installer of a charging unit 106. That is, the electronic alert can graphically, visually, or audibly communicate to the installer the phase order of the phases 105, so as to facilitate correct installation of incoming phases 103. As a non-limiting example, the vehicle 108 can provide voice guidance to the installer that informs the installer of the correct installation of incoming phases 103. In other cases, the electronic alert can visually render the correct installation of incoming phases 103 with the installer via any suitable display connected to the vehicle 108.

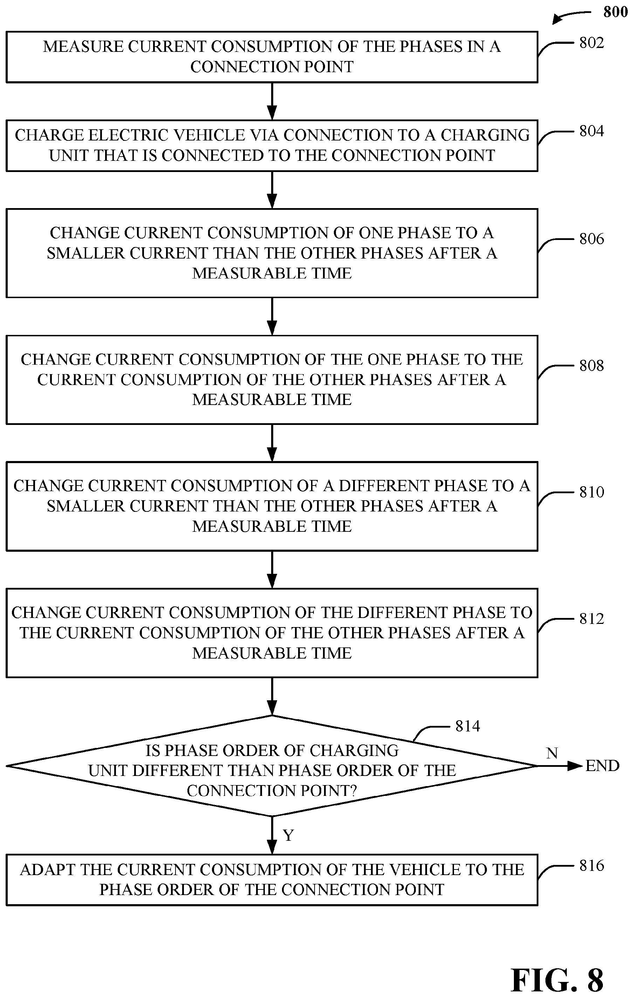

FIG. 8 illustrates a flow diagram of an example, non-limiting computer-implemented method 800 that can facilitate determination of phase order of a connection point via a control routine in accordance with one or more embodiments described herein. In various cases, the phase connection order determination system 206 can facilitate the computer-implemented method 800.

In various embodiments, act 802 can include measuring, by an onboard device (e.g., 210) comprising a processor (e.g., 202), current consumption of the phases in a connection point (e.g., 104).

In various aspects, act 804 can include charging, by the onboard device (e.g., 208), an electric vehicle (e.g., 108) via a connection to a charging unit (e.g., 106) that is connected to the connection point. For instance, the electric vehicle can be connected to a charging station in a house or charging park.

In various instances, act 806 can include changing, by the onboard device (e.g., 208), current consumption of one phase to a smaller current than the other phases after a measurable time. The current consumption of the one phase can be any suitable measurable deviation that is less than the current consumption of the other phases.

In various instances, act 808 can include changing, by the onboard device (e.g., 208), current consumption of the one phase to the current consumption of the other phases after a measurable time.

In various aspects, act 810 can include changing, by the onboard device (e.g., 208), current consumption of a different phase to a smaller current than the other phases after a measurable time.

In various instances, act 812 can include changing, by the onboard device (e.g., 208), current consumption of the different phase to the current consumption of the other phases after a measurable time. In various aspects, act 812 can be iterated for any remaining phases. That is, current consumption can be reduced and increased for each of the three phases in a three-phase system.

In various cases, act 814 can include determining, by the onboard device (e.g., via 208), whether the phase order (e.g., 106) of the connection point is different than the phase order (e.g., 105) of the charging unit. If not (e.g., if the connection point is not different than the phase order of the charging unit), the computer-implemented method 800 can end. If so (e.g., if the connection point is different than the phase order of the charging unit), the computer-implemented method 800 can proceed to act 816.

In various aspects, act 816 can include adapting, by the onboard device (e.g., via 208) the current consumption of the vehicle to the phase order of the connection point. In various embodiments, the regulator component 208 can adapt the current consumption of the vehicle to the phase order of the connection point by adjusting the maximum current consumption of each phase. Therefore, charging of vehicle 108 can be optimized by mitigating uneven current distribution or overloading on one phase, and thereby enable faster charging of the vehicle 108.

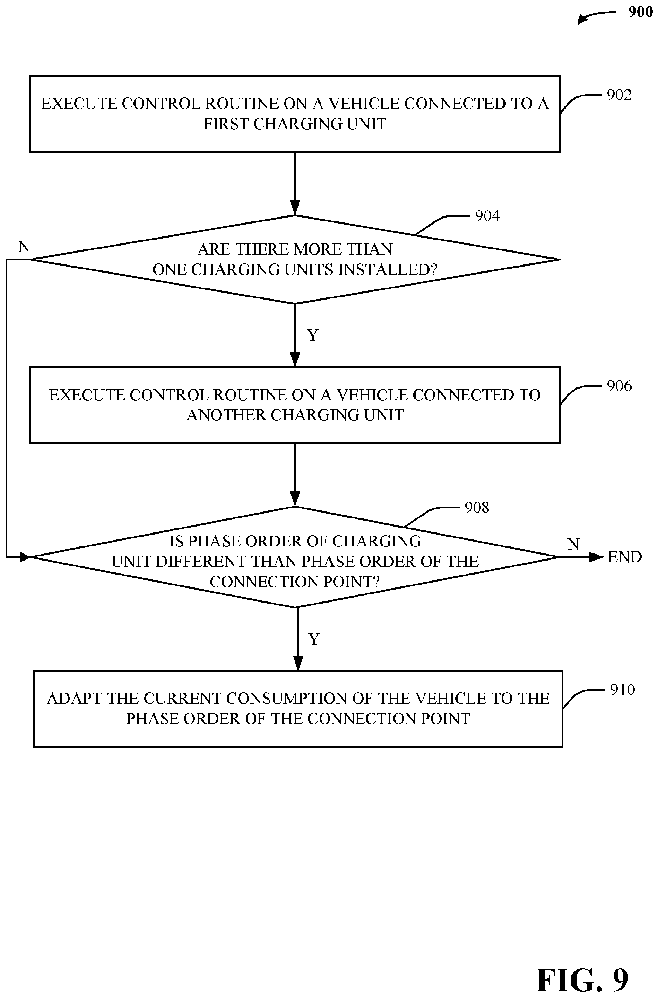

FIG. 9 illustrates a flow diagram of an example, non-limiting computer-implemented method 900 that can facilitate determination of phase order of a connection point via a control routine in accordance with one or more embodiments described herein. In various cases, the phase connection order determination system 206 can facilitate the computer-implemented method 900.

In various instances, act 902 can include executing, by the onboard device (e.g., 208), the control routine on a vehicle connected to a first charging unit (e.g., 106).

In various cases, act 904 can include determining, by the onboard device, whether there is more than one charging unit installed. If not (e.g., if there is not more than one charging unit installed), the computer-implemented method 900 can proceed to act 908. If so (e.g., if there is more than one charging unit installed), the computer-implemented method 900 can proceed to act 906.

In various instances, act 906 can include executing, by the onboard device (e.g., 208), the control routine on a vehicle connected to another charging unit (e.g., 502).

In various cases, act 908 can include determining, by the onboard device (e.g., via 208), whether the phase order (e.g., 106) of the connection point is different than the phase order of the charging unit. If not (e.g., if the connection point is not different than the phase order of the charging unit), the computer-implemented method 900 can end. If so (e.g., if the connection point is different than the phase order of the charging unit), the computer-implemented method 900 can proceed to act 910. The difference in phase order can be determined for each charging unit installed (e.g., for phases 105 and/or phases 504).

In various aspects, act 910 can include adapting, by the onboard device (e.g., via 208) the current consumption of the vehicle to the phase order of the connection point. This can be performed for each vehicle connected to a different charging unit that is installed. In some cases, the control routine can be executed by the same vehicle upon each startup of the vehicle when connected to a different charging unit.

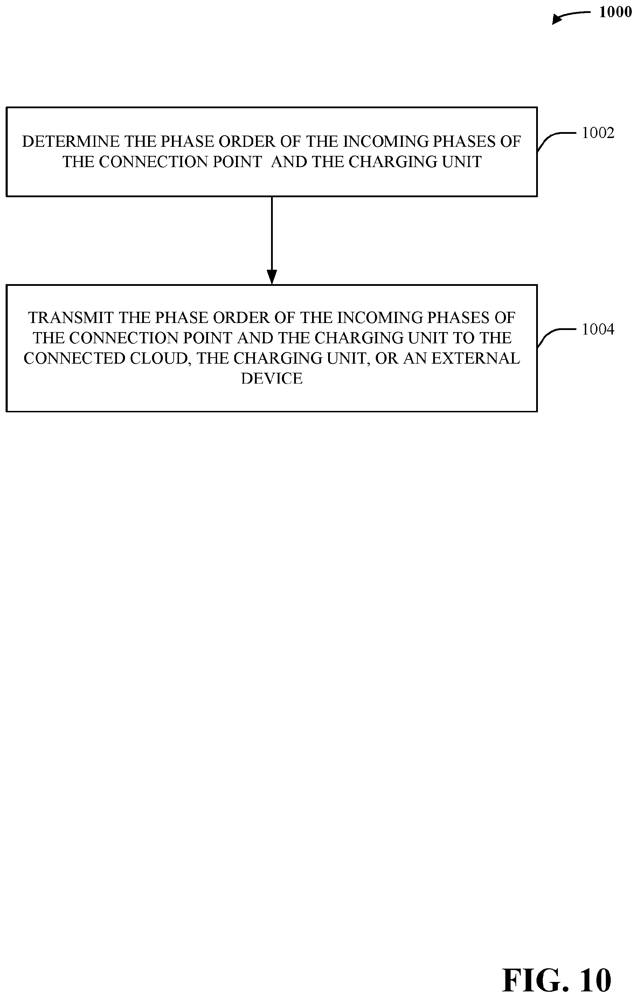

FIG. 10 illustrates a flow diagram of an example, non-limiting computer-implemented method 1000 that can facilitate determination of phase order of a connection point via a control routine in accordance with one or more embodiments described herein. In various cases, the phase connection order determination system 206 can facilitate the computer-implemented method 1000.

In various instances, act 1002 can include determining, by the onboard device (e.g., 208), the phase order of the incoming phases of the connection point (e.g., 104) and the charging unit (e.g., 106).

In various instances, act 1002 can include transmitting, by the onboard device (e.g., 208), the phase order of the incoming phases of the connection point and the charging unit to the connected cloud (e.g., 304), the charging unit, or an external device. Thus, the connected cloud, the charging unit, or an external device can access the correct phase orders and send commands to the charging unit to allow vehicle 108 to draw the adjusted currents determined by regulator component 208.

The systems and/or devices have been (and/or will be further) described herein with respect to interaction between one or more components. Such systems and/or components can include those components or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity, but known by those of skill in the art.

In various instances, machine learning algorithms or models can be implemented in any suitable way to facilitate any suitable aspects described herein. To facilitate some of the above-described machine learning aspects of various embodiments, consider the following discussion of artificial intelligence (AI). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, *zₙ*), to a confidence that the input belongs to a class, as by f(z) *= confidence*(*class*). Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

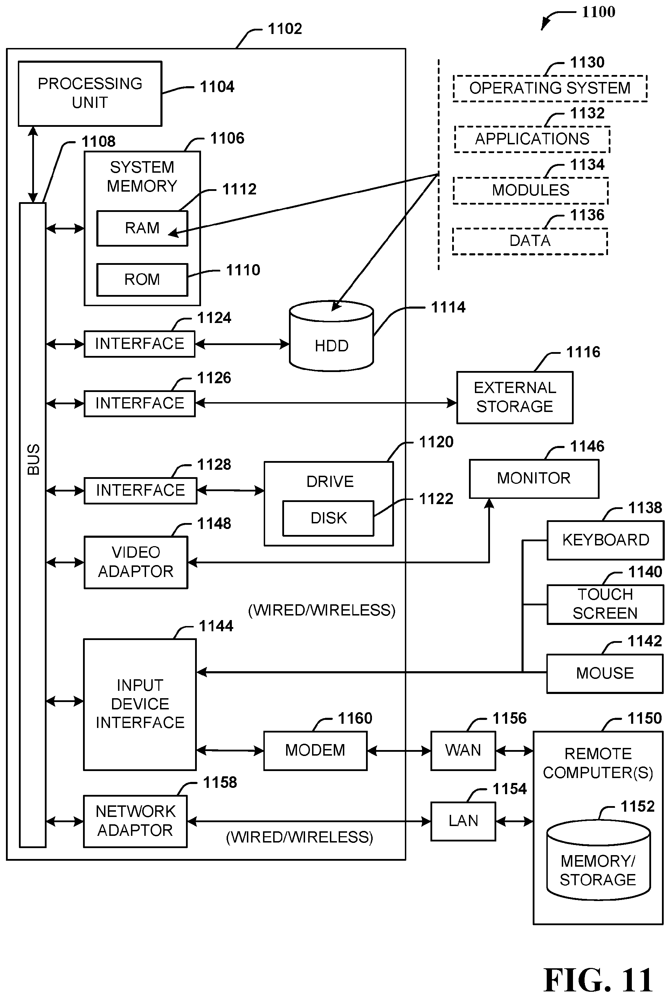

In order to provide additional context for various embodiments described herein, FIG. 11 and the following discussion are intended to provide a brief, general description of a suitable computing environment 1100 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 11, the example environment 1100 for implementing various embodiments of the aspects described herein includes a computer 1102, the computer 1102 including a processing unit 1104, a system memory 1106 and a system bus 1108. The system bus 1108 couples system components including, but not limited to, the system memory 1106 to the processing unit 1104. The processing unit 1104 can be any of various commercially available processors. Dual microprocessors and other multi-processor architectures can also be employed as the processing unit 1104.

The system bus 1108 can be any of several types of bus structure that can further interconnect to a memory bus (with or without a memory controller), a peripheral bus, and a local bus using any of a variety of commercially available bus architectures. The system memory 1106 includes ROM 1110 and RAM 1112. A basic input/output system (BIOS) can be stored in a non-volatile memory such as ROM, erasable programmable read only memory (EPROM), EEPROM, which BIOS contains the basic routines that help to transfer information between elements within the computer 1102, such as during startup. The RAM 1112 can also include a high-speed RAM such as static RAM for caching data.

The computer 1102 further includes an internal hard disk drive (HDD) 1114 (e.g., EIDE, SATA), one or more external storage devices 1116 (e.g., a magnetic floppy disk drive (FDD) 1116, a memory stick or flash drive reader, a memory card reader, etc.) and a drive 1120, e.g., such as a solid state drive, an optical disk drive, which can read or write from a disk 1122, such as a CD-ROM disc, a DVD, a BD, etc. Alternatively, where a solid state drive is involved, disk 1122 would not be included, unless separate. While the internal HDD 1114 is illustrated as located within the computer 1102, the internal HDD 1114 can also be configured for external use in a suitable chassis (not shown). Additionally, while not shown in environment 1100, a solid state drive (SSD) could be used in addition to, or in place of, an HDD 1114. The HDD 1114, external storage device(s) 1116 and drive 1120 can be connected to the system bus 1108 by an HDD interface 1124, an external storage interface 1126 and a drive interface 1128, respectively. The interface 1124 for external drive implementations can include at least one or both of Universal Serial Bus (USB) and Institute of Electrical and Electronics Engineers (IEEE) 13114 interface technologies. Other external drive connection technologies are within contemplation of the embodiments described herein.

The drives and their associated computer-readable storage media provide nonvolatile storage of data, data structures, computer-executable instructions, and so forth. For the computer 1102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1112, including an operating system 1130, one or more application programs 1132, other program modules 1134 and program data 1136. All or portions of the operating system, applications, modules, or data can also be cached in the RAM 1112. The systems and methods described herein can be implemented utilizing various commercially available operating systems or combinations of operating systems.

Computer 1102 can optionally comprise emulation technologies. For example, a hypervisor (not shown) or other intermediary can emulate a hardware environment for operating system 1130, and the emulated hardware can optionally be different from the hardware illustrated in FIG. 11. In such an embodiment, operating system 1130 can comprise one virtual machine (VM) of multiple VMs hosted at computer 1102. Furthermore, operating system 1130 can provide runtime environments, such as the Java runtime environment or the .NET framework, for applications 1132. Runtime environments are consistent execution environments that allow applications 1132 to run on any operating system that includes the runtime environment. Similarly, operating system 1130 can support containers, and applications 1132 can be in the form of containers, which are lightweight, standalone, executable packages of software that include, e.g., code, runtime, system tools, system libraries and settings for an application.

Further, computer 1102 can be enable with a security module, such as a trusted processing module (TPM). For instance with a TPM, boot components hash next in time boot components, and wait for a match of results to secured values, before loading a next boot component. This process can take place at any layer in the code execution stack of computer 1102, e.g., applied at the application execution level or at the operating system (OS) kernel level, thereby enabling security at any level of code execution.

A user can enter commands and information into the computer 1102 through one or more wired/wireless input devices, e.g., a keyboard 1138, a touch screen XXX, and a pointing device, such as a mouse 1142. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1104 through an input device interface 1144 that can be coupled to the system bus 1108, but can be connected by other interfaces, such as a parallel port, an IEEE 13114 serial port, a game port, a USB port, an IR interface, a BLUETOOTH^{®} interface, etc.

A monitor 1146 or other type of display device can be also connected to the system bus 1108 via an interface, such as a video adapter 1148. In addition to the monitor 1146, a computer typically includes other peripheral output devices (not shown), such as speakers, printers, etc.

The computer 1102 can operate in a networked environment using logical connections via wired or wireless communications to one or more remote computers, such as a remote computer(s) 1150. The remote computer(s) 1150 can be a workstation, a server computer, a router, a personal computer, portable computer, microprocessor-based entertainment appliance, a peer device or other common network node, and typically includes many or all of the elements described relative to the computer 1102, although, for purposes of brevity, only a memory/storage device 1152 is illustrated. The logical connections depicted include wired/wireless connectivity to a local area network (LAN) 1154 or larger networks, e.g., a wide area network (WAN) 1156. Such LAN and WAN networking environments are commonplace in offices and companies, and facilitate enterprise-wide computer networks, such as intranets, all of which can connect to a global communications network, e.g., the Internet.

When used in a LAN networking environment, the computer 1102 can be connected to the local network 1154 through a wired or wireless communication network interface or adapter 1158. The adapter 1158 can facilitate wired or wireless communication to the LAN 1154, which can also include a wireless access point (AP) disposed thereon for communicating with the adapter 1158 in a wireless mode.

When used in a WAN networking environment, the computer 1102 can include a modem 1160 or can be connected to a communications server on the WAN 1156 via other means for establishing communications over the WAN 1156, such as by way of the Internet. The modem 1160, which can be internal or external and a wired or wireless device, can be connected to the system bus 1108 via the input device interface 1144. In a networked environment, program modules depicted relative to the computer 1102 or portions thereof, can be stored in the remote memory/storage device 1152. It will be appreciated that the network connections shown are example and other means of establishing a communications link between the computers can be used.

When used in either a LAN or WAN networking environment, the computer 1102 can access cloud storage systems or other network-based storage systems in addition to, or in place of, external storage devices 1116 as described above, such as but not limited to a network virtual machine providing one or more aspects of storage or processing of information. Generally, a connection between the computer 1102 and a cloud storage system can be established over a LAN 1154 or WAN 1156 e.g., by the adapter 1158 or modem 1160, respectively. Upon connecting the computer 1102 to an associated cloud storage system, the external storage interface 1126 can, with the aid of the adapter 1158 or modem 1160, manage storage provided by the cloud storage system as it would other types of external storage. For instance, the external storage interface 1126 can be configured to provide access to cloud storage sources as if those sources were physically connected to the computer 1102.

The computer 1102 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

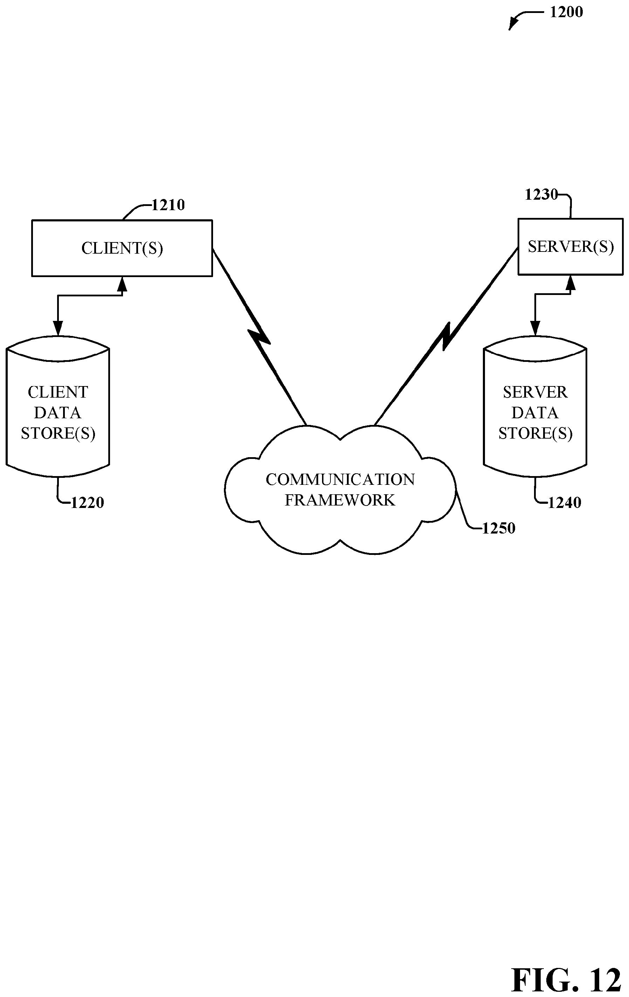

FIG. 12 is a schematic block diagram of a sample computing environment 1200 with which the disclosed subject matter can interact. The sample computing environment 1200 includes one or more client(s) 1210. The client(s) 1210 can be hardware or software (e.g., threads, processes, computing devices). The sample computing environment 1200 also includes one or more server(s) 1230. The server(s) 1230 can also be hardware or software (e.g., threads, processes, computing devices). The servers 1230 can house threads to perform transformations by employing one or more embodiments as described herein, for example. One possible communication between a client 1210 and a server 1230 can be in the form of a data packet adapted to be transmitted between two or more computer processes. The sample computing environment 1200 includes a communication framework 1250 that can be employed to facilitate communications between the client(s) 1210 and the server(s) 1230. The client(s) 1210 are operably connected to one or more client data store(s) 1220 that can be employed to store information local to the client(s) 1210. Similarly, the server(s) 1230 are operably connected to one or more server data store(s) 1240 that can be employed to store information local to the servers 1230.

The present invention may be a system, a method, an apparatus or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations or block diagrams of methods, apparatus (systems), and computer program products according to embodiments of the invention. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments of the present invention. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects of various embodiments described herein are presented in the following clauses.

Clause 1: A system, located onboard an electric vehicle (EV), comprising: a memory that stores computer executable components; and a processor that executes the computer executable components stored in the memory, wherein the computer executable components comprise: a regulator component that generates a control routine to determine a phase order of an electric vehicle supply equipment (EVSE) to which the EV is connected and a phase order of a connection point via asynchronous operation of phases.

Clause 2: The system of any preceding clause, wherein the asynchronous operation of the phases comprises: drawing, by the EV and via the control routine, a smaller current in one phase than other phases for a measurable time.

Clause 3: The system of any preceding clause, wherein the computer-executable components further comprise: a measurement component that determines the phase order of the connection point by mapping a phase with the smaller current to an incoming phase of the connection point.

Clause 4: The system of any preceding clause, wherein the regulator component switches phases to draw the smaller current per phase.

Clause 5: The system of any preceding clause, wherein the measurement component determines a current consumption per phase by the EV during or in startup of charging of the EV.

Clause 6: The system of any preceding clause, wherein the computer-executable components further comprise: a network component that adjusts, locally in the EV or via a connected cloud, an external device, or the EVSE, a maximum current to draw or deliver by the EV per phase based on the phase order determined.

Clause 7: The system of any preceding clause, wherein the onboard device, the connected cloud, the external device, or the EVSE transmits the maximum current to draw or deliver by the EV per phase to the EVSE.

Clause 8: The system of any preceding clause, wherein the regulator component determines a phase order of one or more EVSEs if more than one EVSEs are installed.

Clause 9: The system of any preceding clause, wherein the onboard device, the connected cloud, the external device, or the EVSE accesses real time meter (RTM) data to obtain the phase order determined and the maximum current to draw or deliver by the EV per phase.

Clause 10: The system of any preceding clause, wherein the onboard device, the connected cloud, the external device, or the EVSE adapts, in response to a determination that the phase order of the EV is different from the phase order of the connection point, to the phase order of the connection point.

In various cases, any suitable combination or combinations of clauses 1-10 can be implemented.

Clause 11: A computer-implemented method, comprising: generating, by an onboard device comprising a processor, a control routine to determine a phase order of an electric vehicle supply equipment (EVSE) to which the EV is connected and a phase order of a connection point via asynchronous operation of phases.

Clause 12: The computer-implemented method of any preceding clause, wherein the asynchronous operation of the phases comprises: drawing, by the EV and via the control routine, a smaller current in one phase than other phases for a measurable time.

Clause 13: The computer-implemented method of any preceding clause, further comprising: determining, by the onboard device or an external device, the phase order of the connection point by mapping a phase with the smaller current to an incoming phase of the connection point.

Clause 14: The computer-implemented method of any preceding clause, further comprising: switching, by the onboard device, phases to draw the smaller current per phase.

Clause 15: The computer-implemented method of any preceding clause, further comprising: adjusting, by the onboard device and based on the phase order determined, a maximum current to draw or deliver by the EV per phase locally in the EV or via a connected cloud, external device, or the EVSE.

Clause 16: The computer-implemented method of any preceding clause, wherein the onboard device, the connected cloud, the external device, or the EVSE transmits the maximum current to draw or deliver by the EV per phase to the EVSE.

Clause 17: The computer-implemented method of any preceding clause, wherein the onboard device, the connected cloud, the external device, or the EVSE accesses real time meter (RTM) data to obtain the phase order determined and the maximum current to draw or deliver by the EV per phase.

In various cases, any suitable combination or combinations of clauses 11-17 can be implemented.

Clause 18: A computer program product stored on a non-transitory computer-readable medium and comprising machine-executable instructions, wherein, in response to being executed, the machine-executable instructions cause computing equipment to perform operations, comprising: generating a control routine to determine a phase order of an electric vehicle supply equipment (EVSE) to which the EV is connected and a phase order of a connection point via asynchronous operation of phases.

Clause 19: The computer program product of any preceding clause, the asynchronous operation of the phases comprises drawing, by the EV and via the control routine, a smaller current in one phase than other phases for a measurable time.

Clause 20: The computer program product of any preceding clause, the operations further comprising adjusting, locally in the EV or via a connected cloud, an external device, or the EVSE, a maximum current to draw or deliver by the EV per phase based on the phase order determined.

In various cases, any suitable combination or combinations of clauses 18-20 can be implemented.

In various cases, any suitable combination or combinations of clauses 1-20 can be implemented.

## Claims

1. A system, located onboard an electric vehicle (EV), comprising:
a memory that stores computer executable components; and
a processor that executes the computer executable components stored in the memory, wherein the computer executable components comprise:
a regulator component that generates a control routine to determine a phase order of an electric vehicle supply equipment (EVSE) to which the EV is connected and a phase order of a connection point via asynchronous operation of phases.

2. The system of claim 1, wherein the asynchronous operation of the phases comprises:
drawing, by the EV and via the control routine, a smaller current in one phase than other phases for a measurable time.

3. The system of claim 2, further comprising:
a measurement component that determines the phase order of the connection point by mapping a phase with the smaller current to an incoming phase of the connection point.

4. The system of claim 2, wherein the regulator component switches phases to draw the smaller current per phase.

5. The system of claim 3, wherein the measurement component determines a current consumption per phase by the EV during or in startup of charging of the EV.

6. The system of claim 1, further comprising:
a network component that adjusts, locally in the EV or via a connected cloud, an external device, or the EVSE, a maximum current to draw or deliver by the EV per phase based on the phase order determined.

7. The system of claim 6, wherein the onboard device, the connected cloud, the external device, or the EVSE transmits the maximum current to draw or deliver by the EV per phase to the EVSE.

8. The system of claim 1, wherein the regulator component determines a phase order of one or more EVSEs if more than one EVSEs are installed.

9. The system of claim 6, wherein the onboard device, the connected cloud, the external device, or the EVSE accesses real time meter (RTM) data to obtain the phase order determined and the maximum current to draw or deliver by the EV per phase.

10. The system of claim 6, wherein the onboard device, the connected cloud, the external device, or the EVSE adapts, in response to a determination that the phase order of the EV is different from the phase order of the connection point, to the phase order of the connection point.

11. A computer-implemented method, comprising:
generating, by an onboard device comprising a processor, a control routine to determine a phase order of an electric vehicle supply equipment (EVSE) to which the EV is connected and a phase order of a connection point via asynchronous operation of phases.

12. The computer-implemented method of claim 11, wherein the asynchronous operation of the phases comprises:
drawing, by the EV and via the control routine, a smaller current in one phase than other phases for a measurable time.

13. The computer-implemented method of claim 12, further comprising:
determining, by the onboard device or an external device, the phase order of the connection point by mapping a phase with the smaller current to an incoming phase of the connection point.

14. A computer program product stored on a non-transitory computer-readable medium and comprising machine-executable instructions, wherein, in response to being executed, the machine-executable instructions cause computing equipment to perform operations, comprising:
generating a control routine to determine a phase order of an electric vehicle supply equipment (EVSE) to which the EV is connected and a phase order of a connection point via asynchronous operation of phases.

15. The computer program product according to claim 14, wherein the asynchronous operation of the phases comprises:
drawing, by the EV and via the control routine, a smaller current in one phase than other phases for a measurable time.
